# EUROPEAN PATENT SPECIFICATION

(11) **EP 2 253 518 B1**
(45) Date of publication and mention of the grant of the patent: **02.11.2011**
(21) Application number: 09160713.5
(22) Date of filing: 20.05.2009
(51) Int. Cl.: B60R 22/46

(54) **Pre-tensioner arrangement**
Vorspanneranordnung
Agencement de pré-tendeur

(43) Date of publication of application: 24.11.2010
(73) Proprietor: Autoliv Development AB, 447 83 Vårgårda (SE)
(72) Inventor: Bråse, Dan, 447 32, Vårgårda (SE); Hjerpe, Erik, 423 61, Torslanda (SE)
(74) Representative: Nilsson, Lars-Magnus

(56) References cited:
- EP-A- 0 557 865
- EP-A- 0 980 799
- EP-A- 1 488 969
- DE-C1- 4 206 093
- DE-U1- 9 404 272
- DE-U1- 29 616 414
- US-A- 4 458 921
- US-A- 5 568 940
- US-A- 5 871 235

## Description

### Technical field

The present invention relates to a pre-tensioner arrangement for use in a motor vehicle safety device, comprising a piston member arranged in a cylinder chamber, said piston member being displaceable in a retraction direction by a pressure applied to a first part of said cylinder chamber through an inlet, a connecting member connected to the piston member and connectable to a part of the motor vehicle safety device for pretensioning the motor vehicle safety device, and locking means for locking the piston member.

### Technical background

Pre-tensioner arrangements of the above type are widely used in motor vehicles, e.g. for pre-tensioning of a seat belt in order to tighten up any slack in the belt webbing in the event of a crash. Occasionally, such a pre-tensioner arrangement may be activated even when no crash occurs. That is, an undesired pre-tensioning of the seat belt may be carried out.

US-5 871 235 discloses a pre-tensioner device for a seat belt system. A drawback of this arrangement is however that it may be impossible or at least very difficult and troublesome to re-set the arrangement once activated. In case of an undesired activation, as discussed above, such a pre-tensioner arrangement may thus need to be replaced by a new pre-tensioner arrangement, which may be regarded costly.

### Summary of the invention

It is an object of the present invention to overcome the above described drawbacks, and to provide an improved pre-tensioner arrangement. This and other objects that will be apparent from the following summary and description are achieved by a pre-tensioner arrangement according to the appended claims.

According to an aspect of the present invention, there is provided a pre-tensioner arrangement for use in a motor vehicle safety device, comprising a piston member arranged in a cylinder chamber, said piston member being displaceable in a retraction direction by a pressure applied to a first part of said cylinder chamber through an inlet, a connecting member connected to the piston member and connectable to a part of the motor vehicle safety device for pretensioning the motor vehicle safety device, and locking means for locking the piston member, wherein said locking means being arranged to lock the piston member when the piston member is subjected to an acceleration in a direction opposite to said retraction direction, said acceleration exceeding a predetermined acceleration level, and retaining means arranged in the cylinder chamber for preventing said piston member from being locked when the piston member is subjected to an acceleration in a direction opposite to said retraction direction, said acceleration being below said predetermined acceleration level.

The retaining element enables the piston member to be returned from a retracted position in an easy and smooth manner. A re-settable pretensioner arrangement is thus provided.

During e.g. a pre-impact braking event the piston member is subjected to an acceleration.

Preferably, the predetermined acceleration level is about 0.8g, more preferably about 1.2g and most preferably about 1.5g. The predetermined level may thus be adapted to avoid undesired locking during e.g. a pre-impact breaking event. The advantage of such a predetermined level is thus that undesired locking of the pre-tensioner arrangement during a pre-impact braking event can be avoided, which allows a vehicle safety device to be pretensioned even in case pre-impact braking is carried out.

Preferably, the locking means comprises a first piston member section with an increasing diameter seen in said retraction direction, an inner wall surface of the cylinder and a locking body disposed between the first piston member section and the inner wall surface of the cylinder to be wedged when the piston member is subjected to an acceleration in a direction opposite to said retraction direction. The piston member of the pre-tensioner arrangement may thus be mechanically locked in a retracted postion. Hence, a very robust and reliable locking of the piston member in a retracted position may be achieved.

Preferably, the locking body is formed from a plurality of balls in order to improve the robustness of the locking means.

Preferably, the retaining means comprises a retaining element arranged to the connecting member for preventing said locking body from being wedged between the first piston member section and the inner wall surface when the piston member is subjected to an acceleration in a direction opposite to said retraction direction, said acceleration being below the predetermined acceleration level. Hence, noise reduction may be achieved since movement of the locking both may restricted by the retaining element. Furthermore, the cylinder may be mounted in any orientation without risking the locking body to become wedged.

The retaining element is preferably adapted to deform when the piston member is subjected to an acceleration in a direction opposite to said retraction direction, said acceleration exceeding the predetermined acceleration level, thereby allowing said locking body to be wedged between the first piston member section and the inner wall surface of the cylinder.

In one embodiment the retaining element is slidably arranged to said piston member and displacement of the retaining element in said retraction direction is limited by a stop element arranged to the connecting member, said retaining means further comprises a resilient element arranged between the retaining element and the piston member in such a manner that the retaining element is forced against the stop element by the action of the resilient element.

Preferably, the piston member is, in a first mode of operation, displaceable in the retraction direction by a pressure supplied to the first chamber part from a source of compressed gas via said inlet.

Preferably, the piston member is, in a second mode of operation, displaceable in the retraction direction by a pressure supplied to the first chamber part from a pyrotechnic gas generator via said inlet.

Preferably, the piston member is, in a third mode of operation, displaceable in a direction opposite to said retraction direction, by a pressure gas supplied to the second chamber part from a source of compressed gas via a second inlet.

### Brief description of the drawings

The present invention will now be described in more detail with reference to the accompanying schematic drawings which show embodiments of the invention and in which:
Fig. 1 shows a pre-tensioner arrangement according to an embodiment of the present invention connected to a part of a seat belt system.
Fig. 2a shows a sectional view of the pre-tensioner arrangement in Fig. 1.
Fig. 2b shows a sectional view of the pre-tensioner arrangement in Fig. 1 where the piston member is displaced to a retracted position.
Fig. 2c shows the pre-tensioner in Fig. 1 where the piston member is locked in a retracted position.
Fig. 3a shows, in a sectional view, a pre-tensioner arrangement according to a second embodiment of the present invention.
Fig. 3b shows, in a sectional view, the pre-tensioner arrangement in Fig. 3a during displacement of the piston member from a retracted position in a direction opposite to the retraction direction.
Fig. 3c shows the pre-tensioner in Fig. 3a where the piston member is locked in a retracted position.

### Detailed description of embodiments

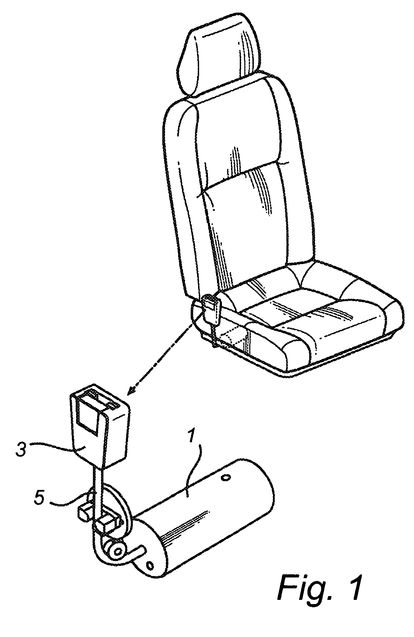

Fig. 1 shows a pre-tensioner arrangement 1 according to an embodiment of the present invention connected to a seat belt buckle 3. A connecting member 5 of the pre-tensioner arrangement 1 is connected to the seat belt buckle 3, which forms part of a seat belt system for a motor vehicle. Alternatively, a pre-tenionsioner arrangement according to an embodiment of the present invention may be connected to a seat belt anchor point.

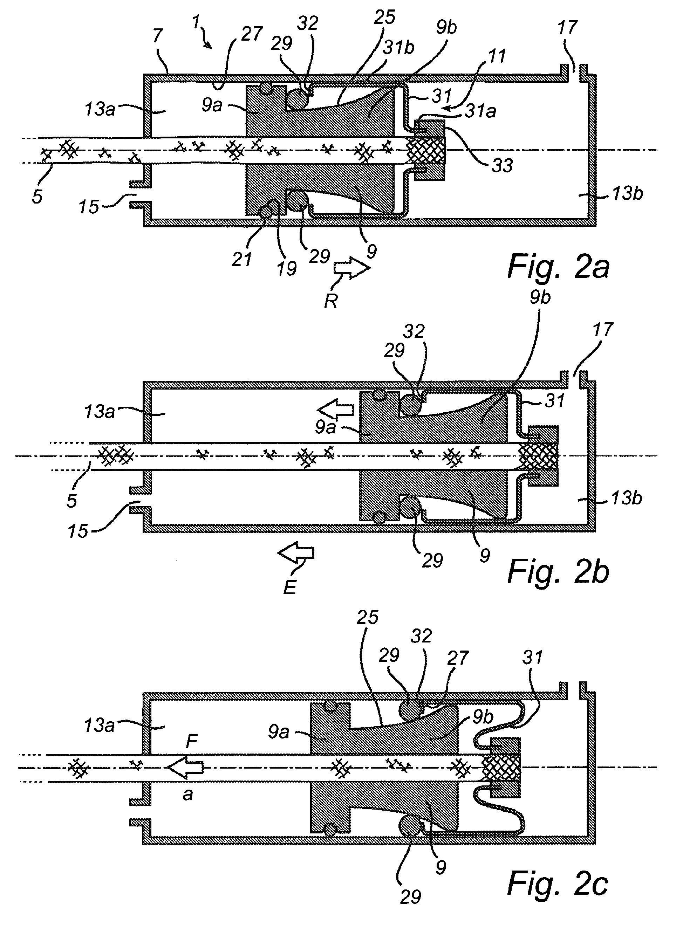

Fig. 2a shows the pre-tensioner arrangement 1 in a sectional view. The pre-tensioner arrangement 1 comprises a cylinder 7, a piston member 9, a connecting member 5 connected to the piston member 9, locking means and retaining means 11. The piston member 9 is slidably arranged in a cylinder chamber 13 of the cylinder 7, which cylinder chamber 13 comprises two chamber parts 13a and 13b. The cylinder 7 is provided with a first gas inlet 15 through which a pressure can be applied to the chamber part 13a. The piston member 9 is displaceable in a first direction R, also referred to as a retraction direction, by a pressure applied to the chamber part 13a. The cylinder 7 is in this embodiment further provided with a second gas inlet 17 through which a pressure can be applied to the chamber part 13b. The piston member 9 is displaceable in a second direction opposite to the retraction direction R, also referred to as an extension direction E, by a pressure applied to the second chamber part 13b. Displacement of the piston member 9 in the extension direction is also possible by means of a force applied, in the extension direction, to the the connecting member 5.

The piston member 9 has a cylindrical flange section 9a and a section 9b with increasing diameter seen in the retraction direction. The piston member is in sealing relationship with an inner wall surface 27 of the cylinder 7 by means of sealing means, such as an O-ring, arranged to the piston member flange section 9a. In this embodiment a peripheral groove 19 is formed in the flange section 9a, which groove 19 receives an O-ring seal 21. The outer diameter of the flange section 9a is slightly less than the inner diameter of the cylinder 7 in order to allow the piston member 9 to slide along the cylinder 7. The sealing means 21 ensures a gas-tight fit between piston member flange section 9a and the inner cylinder wall.

The locking means comprises a surface 25 of the piston member section 9b, the inner wall surface 27 of the cylinder 7 and a locking body. In this embodiment the locking body is formed from a plurality of locking balls 29, which are arrranged in the space between the section 9b and the inner wall surface 25 of the cylinder. Alternatively, the locking body may be a ringshaped element.

The retaining means 11 comprises a retaining element, which in this embodiment is a deformable sleeve 31. One end 31 a of the sleeve 31 is connected to an element 33, which is secured to the connecting member 5. The sleeve 31 is thus arranged in such a manner that it is displaced when the connecting member 5 is displaced. A part 31 b of the deformable sleeve 31 is disposed in the space formed between the section 9b and the inner cylinder wall and is in contact with the locking bodies 29. The part 31 b has a stop surface 32, which is in contact with the locking balls 29, see Fig. 2a. The element 33 is arranged in such a manner that the inlet 17 can not be covered by the element 33.

In the state shown in Fig. 2a the sleeve 31 prevents, independently of the orientation of the cylinder 7, the locking balls 29 from being axially displaced relative the piston member 9. The sleeve 31 thus prevents the balls 29 from being wedged between the piston member section 9b an the inner cylinder wall, even in case the cylinder 7 is horisontally oriented. The sleeve 31 is thus adapted to, as long as undeformed, control the position, seen in a axial direction of the cylinder 7, of the locking bodies 29 relative the piston member section 9b in such a manner that the piston member 9 is prevented from being locked. This design of the retaining element has the advantage that noise may be reduced since movement of the balls 29 are restricted by the surface 32 of the sleeve 31, see Fig.2a.

Hence, noise reduction may be achieved, during e.g. normal driving conditions of a vehicle, since movement of the locking body 29 is restricted by the retaining element 31. Furthermore, the pre-tensioner arrangement 1 may be mounted in any orientation without risking the locking body 29 to become wedged.

As mentioned above the piston member 9, and thereby the connecting member 5 can be axially displaced to a retracted position in response to a pressure applied to the cylinder part 13a through the gas inlet 15. The inlet 15 is preferably connected to two different sources of gas. In this embodiment, the gas inlet 15 is connected to a first source of gas containing compressed air (not shown) as well as to a second source of gas in the form of a pyrotechnic gas generator (not shown) of a kind known in the art. The pre-tensioner arrangement 1 is thereby operable in two pretension operation modes. The first operation mode corresponds to a pre-crash operation mode and the second operation mode corresponds to an in-crash operation mode. In the first pre-tension operation mode a pressure is applied to the cylinder chamber part 13a by compressed air supplied from the first source of gas. In the second pretension operation mode a pressure is applied to the cylinder chamber part 13a by gas supplied from the pyrotechnic gas generator. In both the first and second operation modes a pressure is thus applied through the inlet 15. Alternatively, the cylinder 7 may be provided with a further gas inlet for gas supply to the chamber part 13a. The two separate gas inlets for gas supply to the chamber part 13a may then be connected to a first and a second source of gas respectively.

The connecting member 5 is connected to the piston member 9 in such a manner that the connecting member 5 is displaced when the piston member 9 is displaced and vice versa. The connecting member 5 is connectable to a part of a motor vehicle safety system, such as a seat belt buckle 3 as illustrated in Fig. 1. A displacement of the piston member 9 in the retraction direction may thus correspond to pre-tensioning of a seat belt arrangement by means of seat belt buckle displacement.

The second gas inlet 17 is connected to a gas source containing compressed air for piston member displacement in the extension direction E, e.g. for re-setting the pre-tensioner arrangement and/or presenting a seat belt buckle. It is realized that the connecting member need to have certain stiffness for this purpose. The pre-tensioner arrangement 1 thus has a third mode of operation, also referred to as a presenter mode. In the presenter mode the seat belt buckle 3 becomes more accessible to a vehicle occupant by means of seat belt buckle 3 displacement in the extension direction. It is realised that the third mode of operation may be utilized to re-set the piston member 9 from a retracted position.

Based on a triggering signal from a sensor, such as a pre-crash sensor, indicative of an expected crash a pressure is applied to the first chamber part 13a by means of gas supplied from the first source of gas, i.e. the pneumatic gas source. Due to the pressure applied to chamber 13a from the pneumatic source the piston member 9 is displaced to a retracted position.

Based on a triggering signal from a sensor, such as a in-crash sensor, which indicates that a crash occurs, a pressure is applied to the first chamber part 13a by means of gas supplied from the second gas source, i.e. the pyrotechnical gas generator. Due to the pressure applied to chamber 13a from the pyrotechnical gas generator the piston member 9 is displaced to a retracted position.

Depending on the actual type of triggering signal the pre-tensioner arrangement 1 is thus operated in the first or in the second mode of operation.

In Fig. 2b the piston member 9 of the pre-tensioner arrangement 1 has been displaced to a retracted position. If no crash, or just a low severity crash, occurs when the piston member receives a triggering signal the piston member 9 may be returned by a pressure applied to the second chamber 13b through inlet 17 simultaneously as pressure is evacuated from the first chamber part 13a through the inlet 15. Alternatively, an occupant can manually pull the part of the motor vehicle safety device to which the connecting member 5 is connected simultaneously as gas is evacuated through the inlet 15.

If, on the other hand, a crash occurs it is desired to lock the piston member in a retracted position. In a crash the connecting member 5 is, via the seat belt buckle 3, subjected to an acceleration. The locking means of the pre-tensioner arrangement 1 is arranged to lock the piston member 9 when the connecting member 5 is subjected to an acceleration in a direction opposite to the retraction direction, i.e. in the extraction direction, that exceeds a predetermined level. In this embodiment the predetermined value is about 1.5g.

Referring to Fig. 2c locking of the piston member 9 in a retracted position will be described. When subjected to an acceleration a in the extraction direction, which acceleration exceeds 1.5g, the sleeve 31 is, via the connecting member 5, forced against the locking bodies 29. Due to the mass inertia of the locking bodies 29 they are not displaced relative the piston member 9. Consequently, the sleeve 31 is deformed. After deformation of the sleeve it does not longer prevent the locking bodies 29 from being wedged between the cylinder inner wall and the surface 25 of the section 9b. The sleeve deformation thus enables the locking bodies 29 to be wedged and thereby lock the piston member 9 in a retracted position. The piston member 9 is then prevented from displacement in the extension direction E. Fig. 2c shows the pre-tensioner arrangement 1 when the piston member 9 is locked in a retracted position.

The sleeve 31 is adapted not to deform when the connecting member 5 is subjected to an acceleration not exceeding the predetermined level, which in this case is about 1.5g, in order to avoid undesired locking during e.g. a pre-impact breaking event. The characteristics of the sleeve 31 thus determines at which aceleration level the piston member 9 is locked.

The piston member 9 is locked as long as the connecting member 5 is subjected to a certain force in a direction opposite to the retraction direction, said force exceeding a predetermined holding force. When the acceleration a is below the predetermined level and the force F is below the holding force the connecting member may thus again be displaceable in the extension direction for the purpose of resetting the piston member to a initial position. The holding force is determined by factors such as the geometry of the section 9b and the materials of the components forming the locking means.

As mentioned above the connecting member need to be subjected to at least a predetermined acceleration, in this case 1.5g, in the extraction direction E to in order to cause deformation of the sleeve 31. Once deformed the sleeve 31 no longer prevent the locking bodies 29 from being wedged between the cylinder inner wall and the surface 25 of the section 9b and locking of the piston member 9 in a retracted position is then enabled. Prior to being locked the piston member 9 performs a small displacement in the extension direction E, which corresponds to the compression of the sleeve in the extension direction. After this initial small displacement in the extraction direction the locking balls 29 are thus wedged between the section 9b and the inner cylinder wall and consequently the piston member 9 is locked in a retracted position, as illustrated in Fig. 2c, i.e further displacement of the connecting member 5 is prevented.

As mentioned above, the connecting device 5 is in this case connected to a seat belt buckle 3 of a seat belt system. The acceleration that causes locking of the piston member 9, as illustrated in Fig. 2c, thus originates from a vehicle occupant restrained by a seat belt in a crash situation.

It should be noted that the pressure in chamber 13a prevent the piston member 9 from being displaced from a retracted position in the extension direction to some extent. The pressure is for instance enough to prevent displacement from a retracted position during a pre-impact braking event. The pressure is however not enough to lock the piston member 9 in a retracted position in the event of a crash.

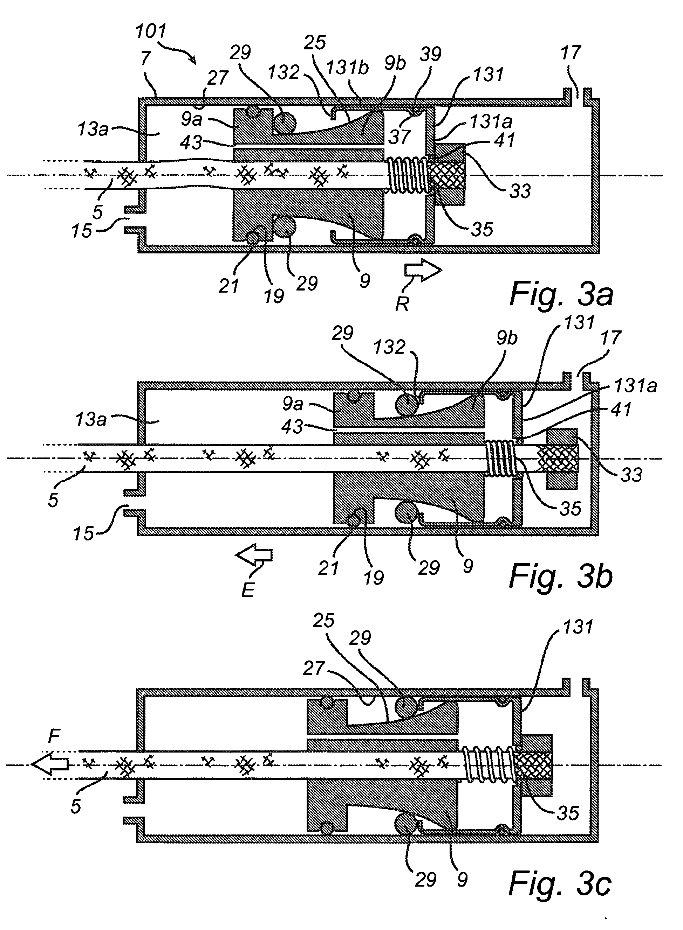

A pretensioner arrangement 101 according to a second embodiment of the present invention is shown in Fig. 3a. Essentially all features disclosed in the first embodiment are also present in the second embodiment with reference numerals identifying similar or same features. Having mentioned this, the description will focus on explaining the differing features. The pretensioner arrangement 101 differs in that the retaining means in this embodiment comprises a non-deformable retaining element 131 and a resilient element in the form of a spring 35. The sleeve 131 is in this embodiment reinforced in order to avoid deformation thereof.The non-deformable sleeve 131 is slidably arranged to the connecting member 5 to enable relative displacement between the sleeve and the piston member 9. The spring 35 is arranged between the piston member 9 and a part 131 a of the sleeve 131 in such a manner that the sleeve 131 is forced against an element 33 due to the spring force of the spring element 35. The element 33, which forms a stop element for the sleeve 131, is secured to the connecting member 5. The sleeve 131 is provided with a peripheral groove 37 for receiving a sealing means. In this case an O-ring seal 39 is received in the groove 37 to form a gas-tight fit between the sleeve 131 and the inner cylinder wall. A further O-ring 41 is arranged to the sleeve 131 in order to provide for a gas-tight fit between the sleeve 131 and the connecting member 5. The pre-tensioner arrangement 101 is further provided with a channel 43 through which gas can be evacuated from the second chamber part 13b to the first chamber part 13a.

In this embodiment the piston member 9 can not be returned from a retracted position by an occupant pulling the seat belt buckle 3. The piston member can in this case be returned from a retracted position only by a pressure applied to the second chamber part 13b simultaneously as pressure is evacuated from the first chamber part 13a. Such a pressure forces the sleeve 131 to contact the locking balls 29 and thereby prevent them from being wedged when the connecting member 5 is displaced in the extension direction. Prior to piston member 9 displacement in the extension direction the sleeve 131 thus need to be displaced in the extension direction to prevent the balls from being wedged. During sleeve displacement in the extension direction the resilient element is compressed.

Fig. 3b illustrates the pre-tensioner arrangement 1 during piston member displacement, in the extension direction, caused by a pressure applied to the chamber part 13b. When the spring 35 is compressed the retaining element 131 prevents the balls 29 from being wedged, i.e. displacement of the piston member 9 in the extension direction E is allowed. In this embodiment the retaining element 131 thus need to, before displacement of the piston member in the extension direction is possible, be displaced to a position where it retains the locking bodies 29.

In case a crash occurs the connecting member 5 is subjected to an acceleration a that causes the locking means to lock the piston member in a retracted position, as illustrated in Fig. 3c. The retaining means 131 is not deformed.

It will be appreciated that the described embodiments of the invention can be modified and varied by a person skilled in the art without departing from the inventive concept defined in the claims.

For instance, in an alternative embodiment, where the locking body is a ring, the retaining element may be formed from an element comprising a circular plate and a number of legs extending from the plate, which legs are disposed within the space formed between the section 9b and the inner cylinder wall, thus restricting the locking body from becoming wedged for accelerations below a predetermined acceleration level.

## Claims

1. Pre-tensioner arrangement (1) for use in a motor vehicle safety device, comprising a piston member (9) arranged in a cylinder chamber (13), said piston member (9) being displaceable in a retraction direction by a pressure applied to a first part (13a) of said cylinder chamber (13) through an inlet (15), a connecting member (5) connected to the piston member (9) and connectable to a part (3) of the motor vehicle safety device for pretensioning the motor vehicle safety device, and locking means (25, 27, 29) for locking the piston member (9),
said locking means (25, 27, 29) being arranged to lock the piston member (9) when the piston member (9) is subjected to an acceleration in a direction opposite to said retraction direction, said acceleration exceeding a predetermined acceleration level, and
**characterised in**
retaining means (11) arranged in the cylinder chamber (13) for preventing said piston member (9) from being locked when the piston member (9) is subjected to an acceleration in a direction opposite to said retraction direction, said acceleration being below said predetermined acceleration level.

2. Pre-tensioner arrangement (1) according to claim 1, wherein said predetermined level is about 0.8 g.

3. Pre-tensioner arrangement (1) according to any one of the preceeding claims, wherein the locking means (25, 27, 29) comprises a piston member section (9b) with an increasing diameter seen in said retraction direction, an inner wall surface (27) of the cylinder (7) and a locking body (29) disposed between the piston member section (9b) and the inner wall surface (27) of the cylinder (7) to be wedged when the piston member (9) is subjected to an acceleration in a direction opposite to said retraction direction, said acceleration being below said predetermined acceleration level.

4. Pre-tensioner arrangement (1) according to claim 3, wherein said locking body (29) is formed from a plurality of balls.

5. Pre-tensioner arrangement (1) according to any one of the claims 3-4, wherein the retaining means (11) comprises a retaining element (31; 131) arranged to the connecting member (5) for preventing said locking body (29) from being wedged between the piston member section (9b) and the inner wall surface (27) when the piston member (9) is subjected to an acceleration in a direction opposite to said retraction direction, said acceleration being below the predetermined acceleration level.

6. Pre-tensioner arrangement (1) according to claim 5, wherein said retaining element (31) is adapted to deform when the piston member (9) is subjected to an acceleration in a direction opposite to said retraction direction, said acceleration exceeding the predetermined acceleration level, thereby allowing said locking body (29) to be wedged between the piston member section (9b) and the inner wall surface (25).

7. Pre-tensioner arrangement (1) according to claim 5, wherein said retaining element (31) is slidably arranged to said piston member (9) and displacement of the retaining element (31) in said retraction direction is limited by a stop element (33) arranged to the connecting member (5), said retaining means further comprises a resilient element (35) arranged between the retaining element (31) and the piston member (9) in such a manner that the retaining element (31) is forced against the stop element (33) by the action of the resilient element (35).

8. Pre-tensioner arrangement (1) according to any one of the preceeding claims, wherein the piston member (9), in a first mode of operation, is displaceable in the retraction direction by a pressure supplied to the first chamber part (13a) from a source of compressed gas via said inlet (15).

9. Pre-tensioner arrangement (1) according to any one of the preceeding claims, wherein the piston member (9), in a second mode of operation, is displaceable in the retraction direction by a pressure supplied to the first chamber part (13a) from a pyrotechnic gas generator via said inlet (15).

10. Pre-tensioner arrangement (1) according to any one of the preceeding claims, wherein the piston member (9), in a third mode of operation, is displaceable, in a direction opposite to said retraction direction, by a pressure gas supplied to the second chamber part (13b) from a source of compressed gas via a second inlet (17).

## Patentansprüche

1. Vorspanneranordnung (1) zur Verwendung in einer Kraftfahrzeug-Sicherheitseinrichtung, welche umfasst: ein Kolbenelement (9), das in einer Zylinderkammer (13) angeordnet ist, wobei das Kolbenelement (9) durch einen Druck, der an einen ersten Teil (13a) der Zylinderkammer (13) durch einen Einlass (15) angelegt wird, in einer Einzugsrichtung verschiebbar ist, ein Verbindungselement (5), das mit dem Kolbenelement (9) verbunden ist und mit einem Teil (3) der Kraftfahrzeug-Sicherheitseinrichtung verbindbar ist, um die Kraftfahrzeug-Sicherheitseinrichtung vorzuspannen, und Verriegelungsmittel (25, 27, 29) zum Verriegeln des Kolbenelements (9),
wobei die Verriegelungsmittel (25, 27, 29) dafür eingerichtet sind, das Kolbenelement (9) zu verriegeln, wenn das Kolbenelement (9) einer Beschleunigung in einer zu der Einzugsrichtung entgegengesetzten Richtung ausgesetzt ist, wobei die Beschleunigung ein vorbestimmtes Beschleunigungsniveau übersteigt,
**dadurch gekennzeichnet, dass**
Haltemittel (11) in der Zylinderkammer (13) angeordnet sind, um zu verhindern, dass das Kolbenelement (9) verriegelt wird, wenn das Kolbenelement (9) einer Beschleunigung in einer zu der Einzugsrichtung entgegengesetzten Richtung ausgesetzt ist, wobei die Beschleunigung unter dem vorbestimmten Beschleunigungsniveau liegt.

2. Vorspanneranordnung (1) nach Anspruch 1, wobei das vorbestimmte Niveau etwa 0,8 g beträgt.

3. Vorspanneranordnung (1) nach einem der vorhergehenden Ansprüche, wobei das Verriegelungsmittel (25, 27, 29) umfasst: einen Kolbenelementabschnitt (9b) mit einem sich vergrößernden Durchmesser, in der Einzugsrichtung gesehen, eine Innenwandfläche (27) des Zylinders (7) und einen zwischen dem Kolbenelementabschnitt (9b) und der Innenwandfläche (27) des Zylinders (7) angeordneten Verriegelungskörper (29), der festgeklemmt wird, wenn das Kolbenelement (9) einer Beschleunigung in einer zu der Einzugsrichtung entgegengesetzten Richtung ausgesetzt ist, wobei die Beschleunigung unter dem vorbestimmten Beschleunigungsniveau liegt.

4. Vorspanneranordnung (1) nach Anspruch 3, wobei der Verriegelungskörper (29) von mehreren Kugeln gebildet wird.

5. Vorspanneranordnung (1) nach einem der Ansprüche 3-4, wobei das Haltemittel (11) ein Halteelement (31; 131) umfasst, das an dem Verbindungselement (5) angeordnet ist, zum Verhindern, dass der Verriegelungskörper (29) zwischen dem Kolbenelementabschnitt (9b) und der Innenwandfläche (27) festgeklemmt wird, wenn das Kolbenelement (9) einer Beschleunigung in einer zu der Einzugsrichtung entgegengesetzten Richtung ausgesetzt ist, wobei die Beschleunigung unter dem vorbestimmten Beschleunigungsniveau liegt.

6. Vorspanneranordnung (1) nach Anspruch 5, wobei das Halteelement (31) dazu eingerichtet ist, sich zu verformen, wenn das Kolbenelement (9) einer Beschleunigung in einer zu der Einzugsrichtung entgegengesetzten Richtung ausgesetzt ist, wobei die Beschleunigung das vorbestimmte Beschleunigungsniveau übersteigt, wodurch es ermöglicht, dass der Verriegelungskörper (29) zwischen dem Kolbenelementabschnitt (9b) und der Innenwandfläche (25) festgeklemmt wird.

7. Vorspanneranordnung (1) nach Anspruch 5, wobei das Halteelement (31) gleitend an dem Kolbenelements (9) angebracht ist und eine Verschiebung des Halteelements (31) in der Einzugsrichtung durch ein Anschlagelement (33) begrenzt wird, das an dem Verbindungselement (5) angebracht ist, wobei das Halteelement ferner ein elastisches Element (35) umfasst, dass zwischen dem Halteelement (31) und dem Kolbenelement (9) auf eine solche Weise angeordnet ist, dass das Halteelement (31) durch die Wirkung des elastischen Elements (35) gegen das Anschlagelement (33) gedrückt wird.

8. Vorspanneranordnung (1) nach einem der vorhergehenden Ansprüche, wobei das Kolbenelement (9) in einer ersten Betriebsart in der Einzugsrichtung durch einen Druck verschiebbar ist, der dem ersten Kammerteil (13a) von einer Quelle von Druckgas über den Einlass (15) zugeführt wird.

9. Vorspanneranordnung (1) nach einem der vorhergehenden Ansprüche, wobei das Kolbenelement (9) in einer zweiten Betriebsart in der Einzugsrichtung durch einen Druck verschiebbar ist, der dem ersten Kammerteil (13a) von einem pyrotechnischen Gasgenerator über den Einlass (15) zugeführt wird.

10. Vorspanneranordnung (1) nach einem der vorhergehenden Ansprüche, wobei das Kolbenelement (9) in einer dritten Betriebsart in einer zu der Einzugsrichtung entgegengesetzten Richtung durch ein Druckgas verschiebbar ist, das dem zweiten Kammerteil (13b) von einer Quelle von Druckgas über einen zweiten Einlass (17) zugeführt wird.

## Revendications

1. Agencement de pré-tendeur (1) à utiliser dans un dispositif de sécurité de véhicule à moteur, comprenant un élément de piston (9) agencé dans une chambre de cylindre (13), ledit élément de piston (9) étant déplaçable dans une direction de rétraction par une pression appliquée sur une première partie (13a) de ladite chambre de cylindre (13) à travers une admission (15), un élément de raccordement (5) raccordé à l'élément de piston (9) et pouvant être raccordé à une pièce (3) du dispositif de sécurité de véhicule à moteur pour prétendre le dispositif de sécurité de véhicule à moteur, et un moyen de verrouillage (25, 27, 29) pour verrouiller l'élément de piston (9),
ledit moyen de verrouillage (25, 27, 29) étant agencé pour verrouiller l'élément de piston (9) quand l'élément de piston (9) est soumis à une accélération dans une direction opposée à ladite direction de rétraction, ladite accélération dépassant un niveau d'accélération prédéterminé, et
**caractérisé en ce que** un moyen de retenue (11) agencé dans la chambre de cylindre (13) pour empêcher que ledit élément de piston (9) soit bloqué quand l'élément de piston (9) est soumis à une accélération dans une direction opposée à ladite direction de rétraction, ladite accélération étant inférieure audit niveau d'accélération prédéterminé.

2. Agencement de pré-tendeur (1) selon la revendication 1, dans lequel ledit niveau prédéterminé est d'environ 0.8 g.

3. Agencement de pré-tendeur (1) selon une quelconque des revendications précédentes, dans lequel le moyen de verrouillage (25, 27, 29) comprend une section d'élément de piston (9b) avec un diamètre croissant vu dans ladite direction de rétraction, une surface de paroi intérieure (27) du cylindre (7) et un corps de verrouillage (29) disposé entre la section d'élément de piston (9b) et la surface de paroi intérieure (27) du cylindre (7) à caler quand l'élément de piston (9) est soumis à une accélération dans une direction opposée à ladite direction de rétraction, ladite accélération étant inférieure audit niveau d'accélération prédéterminé.

4. Agencement de pré-tendeur (1) selon la revendication 3, dans lequel ledit cops de verrouillage (29) est formé d'une pluralité de billes.

5. Agencement de pré-tendeur (1) selon une quelconque des revendications 3 à 4, dans lequel le moyen de retenue (11) comprend un élément de retenue (31 ; 131) agencé vers l'élément de raccordement (5) pour empêcher que ledit corps de verrouillage (29) soit calé entre la section d'élément de piston (9b) et la surface de paroi intérieure (27) quand l'élément de piston (9) est soumis à une accélération dans une direction opposée à ladite direction de rétraction, ladite accélération étant inférieure au niveau d'accélération prédéterminé.

6. Agencement de pré-tendeur (1) selon la revendication 5, dans lequel ledit élément de retenue (31) est adapté afin de se déformer quand l'élément de piston (9) est soumis à une accélération dans une direction opposée à ladite direction de rétraction, ladite accélération excédant le niveau d'accélération prédéterminé, en permettant ainsi de caler ledit corps de verrouillage (29) entre la section d'élément de piston (9b) et la surface de paroi intérieure (25).

7. Agencement de pré-tendeur (1) selon la revendication 5, dans lequel ledit élément de retenue (31) est agencé de manière coulissante sur ledit élément de piston (9) et le déplacement de l'élément de retenue (31) dans ladite direction de rétraction est limité par un élément d'arrêt (33) agencé sur l'élément de raccordement (5), ledit moyen de retenue comprend en outre un élément résilient (35) agencé entre l'élément de retenue (31) et l'élément de piston (9) d'une manière telle que l'élément de retenue (31) soit pressé contre l'élément d'arrêt (33) par l'action de l'élément résilient (35).

8. Agencement de pré-tendeur (1) selon une quelconque des revendications précédentes, dans lequel l'élément de piston (9), dans un premier mode de fonctionnement, est déplaçable dans la direction de rétraction par une pression alimentée sur la première partie de chambre (13a) depuis une source de gaz comprimé via ladite admission (15).

9. Agencement de pré-tendeur (1) selon une quelconque des revendications précédentes, dans lequel l'élément de piston (9), dans un second mode de fonctionnement, est déplaçable dans la direction de rétraction par une pression alimentée sur la première partie de chambre (13a) depuis un générateur de gaz pyrotechnique via ladite admission (15).

10. Agencement de pré-tendeur (1) selon une quelconque des revendications précédentes, dans lequel l'élément de piston (9), dans un troisième mode de fonctionnement, est déplaçable dans une direction opposée à ladite direction de rétraction, par un gaz pressurisé alimenté sur la seconde partie de chambre (13b) depuis une source de gaz comprimé via une seconde admission (17).
